(19) Europäisches Patentamt
European Patent Office
Office européen des brevets

(11) **EP 3 450 404 A1**

(12) **EUROPEAN PATENT APPLICATION**

(43) Date of publication:
**06.03.2019 Bulletin 2019/10**

(21) Application number: **17189157.5**

(22) Date of filing: **04.09.2017**

(51) Int Cl.:
*C02F 3/34* (2006.01)        *C11D 3/38* (2006.01)
*C02F 3/12* (2006.01)        *C02F 103/00* (2006.01)
*C11D 3/04* (2006.01)        *C11D 3/06* (2006.01)
*C11D 3/26* (2006.01)        *C11D 3/33* (2006.01)
*C11D 3/36* (2006.01)        *C11D 3/34* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Eidgenössische Anstalt für
Wasserversorgung,
Abwasserreinigung und Gewässerschutz,
Eawag
8600 Dübendorf ZH (CH)**

(72) Inventors:
• **Julian, Timothy**
  **8600 Dübendorf (CH)**
• **Larivé, Odile**
  **1020 Renens (CH)**
• **Morgenroth, Eberhard**
  **8602 Wangen (CH)**
• **Udert, Kai**
  **8700 Küsnacht (CH)**
• **Ziemba, Christopher**
  **8003 Zurich (CH)**

(74) Representative: **Kasche, André**
  **Kasche & Partner AG
  Resirain 1
  8125 Zollikerberg (CH)**

(54) **MICROBIAL NUTRIENT-SUPPLEMENTED CLEANING COMPOSITIONS, USES THEREOF AND METHODS FOR WASTEWATER REGENERATION**

(57)     The present invention is directed to a composition comprising (i) at least one cleaning agent, and (ii) at least one nutrient supporting microbial growth for biological wastewater treatment, wherein upon the addition of water to the composition the cleaning agent (i) is present in an effective concentration for cleaning an object of interest, and wherein the nutrient (ii) is present in an effective concentration for supporting microbial growth for subsequent biological wastewater treatment. The invention further relates to a corresponding industrial, household or personal cleaning composition, a method for biological waste water treatment, uses of such compositions, and a corresponding sanitary or hygiene system comprising a composition of the present invention.

**Description**

The present invention is directed to a composition comprising (i) at least one cleaning agent, and (ii) at least one nutrient supporting microbial growth for biological wastewater treatment, wherein upon the addition of water to the composition the cleaning agent (i) is present in an effective concentration for cleaning an object of interest, and wherein the nutrient (ii) is present in an effective concentration for supporting microbial growth for subsequent biological wastewater treatment. The invention further relates to a corresponding industrial, household or personal cleaning composition, a method for biological waste water treatment, uses of such compositions, and a corresponding sanitary or hygiene system comprising a composition of the present invention.

**Background of the invention**

Centralized wastewater recycling systems that feature a sewage system in combination with a centralized wastewater treatment facility are standard in the modern world. In many developing countries, the costs for modern centralized drinking water, wastewater treatment and water recycling systems are not practical. In these countries, the sources and treatments of water are often not reliable and water reuse often consists of using the same water for less demanding purposes until it is finally used for plants or discarded. Discarded water is often discharged into the environment without any prior treatment. Without water recycling, there is constant demand for new water. And when new water is unavailable, its cost is too high or safety is compromised, sanitation and health are directly affected.

The global concern for water scarcity has prompted the development of a few effective water recycling technologies. Decentralized water recycling systems in the developed world are designed for reusing clean rinsing water only and typically perform minimal treatment on rinsing water using physical separation processes. These systems are dependent on having an abundant supply of clean water and a separate sewer into which to discard more heavily contaminated wastewater, as the level of treatment is insufficient for recycling water that contains soap, dirt and other contaminants.

Physical treatment technologies such as screens and activated carbon filters can remove soap, dirt and color from more contaminated wastewater. However, screens need to be regularly cleaned and activated carbon has a limited capacity and lifetime. Electrolysis is effective for treating some wastewaters but can be prohibitively expensive and requires that the water contains sufficient salt.

Biological treatment is simpler and generally more affordable than physical or electrolysis treatments. Typical greywater, i.e. wastewater generated from sinks, showers and bathtubs (not from toilets: yellow- and blackwater), is unsuited to support the necessary microbial processes for wastewater regeneration without the addition of nutrients and salts. In particular, when the water for sanitary and hygiene use is collected rainwater, the mineral and nutrient content can also be too low to support microbiological growth.

Nutrients for microorganisms are those elements which a living organism requires for growth and proliferation. For example, Egli ("Nutrition, Microbial," in Desk Encyclopedia of Microbiology, (2009), ed. M. Schaechter (Oxford: Elsevier Academic Press), 788-804) identifies the following elements, C, H, O, N, P, S, K and Mg as being always essential for microbial growth and/or proliferation: while additional elements, e.g. Fe, Ca, Mn, Co, Cu, Mo, and Zn are also essential under most circumstances. Other elements, such as Al, are only essential rarely or in special cases.

Erikson et al. (Characteristics of grey wastewater, (2002) Urban Water, 4 (1), 85-104) teaches that hand washing water contains very low concentrations of many of these essential nutrients. Jefferson et al. (Nutrient addition to enhance biological treatment of greywater (2001), Water Research, 35 (1), 2702-2710) proposes the addition of nutrients for biological greywater treatment. Kuenzle et al. (An energy-efficient membrane bioreactor for on-site treatment and recovery of wastewater (2015) Journal of Water Sanitation and Hygiene for Development, 5 (3), 448-455) presents a biologically activated membrane bioreactor (BAMBi) as a simple and affordable decentralized system for recycling wastewater that is nutrient-balanced.

Treating greywater with a BAMBi system, however, requires that nutrient balancing must be achieved before treatment. Labor-intensive strategies for manual balancing such as first measuring nitrogen and/or carbon content and then adding optimized nutrient supplement dosages are not practical for many decentralized microbial wastewater treatment facilities, such as those in underdeveloped countries and in primitive refugee and field camps. Sensor-based supplementing could be implemented independent of the user, however, this would incur great expense.

It is the objective of the present invention to provide an efficient and cost-effective composition for the treatment of wastewater and corresponding methods for treating wastewater, preferably for the treatment of grey wastewater. In a first aspect, the present invention is directed to a composition comprising

(i) at least one cleaning agent, and
(ii) at least one nutrient supporting microbial growth for biological wastewater treatment,

wherein upon the addition of water to the composition the cleaning agent (i) is present in an effect-tive concentration for cleaning an object of interest, and wherein the nutrient (ii) is present in an effective concentration for supporting microbial growth for subsequent biological wastewater treatment.

The amount of water to be added to the composition can, of course, only be defined relative to the amount of the composition dispensed for cleaning the object of interest. Hence, types and amounts of cleaning agent(s) and nutrient(s) and water dilution must be selected by routine experimentation to give an aqueous composition effective for cleaning the object of interest and effective for supporting microbial growth for subsequent biological wastewater treatment. The amounts and ratios of the composition components will vary with the types of cleaning agent(s) and nutrient(s) as well as with the biological wastewater treatment type.

The at least one cleaning agent for use in the present invention is any agent or mixture of agents with cleaning properties in dilute solutions, for example but not limited to, detergents, wetting agents, emulsifiers, foaming agents and dispersants, all of which are commonly grouped as surfactants.

Depending on the net charge or hydrophobicity of a head group attached to a hydrocarbon chain, surfactants may be anionic, cationic, non-ionic or zwitterionic in nature.

Anionic surfactants for use in the present invention include, but are not limited to, sulfates, sulfonates, phosphates and carboxylates, for example, selected from the group consisting of ammonium lauryl sulfate, sodium lauryl sulfate (sodium dodecyl sulfate, SLS, or SDS), alkyl-ether sulfates, sodium laureth sulfate (sodium lauryl ether sulfate or SLES) and sodium myreth sulfate.

Other anionic surfactants for use in the present invention include but are not limited to docusate (dioctyl sodium sulfosuccinate), perfluorooctanesulfonate (PFOS), perfluorobutanesulfonate, alkyl-aryl ether phosphates, alkyl ether phosphates, carboxylates, alkyl carboxylates (soaps), sodium stearate, sodium lauroyl sarcosinate, and carboxylate-based fluorosurfactants, e.g. perfluorononanoate and perfluorooctanoate (PFOA or PFO).

Cationic surfactants for use in the present invention include but are not limited to pH-dependent primary, secondary or tertiary amines (primary and secondary amines become positively charged at pH < 10), e.g. octenidine dihydrochloride, and permanently charged quaternary ammonium salts such as, e.g. cetrimonium bromide (CTAB), cetylpyridinium chloride (CPC), benzalkonium chloride (BAC), benzethonium chloride (BZT), dimethyldioctadecylammonium chloride, dioctadecyldimethylammonium bromide (DODAB).

Zwitterionic (amphoteric) surfactants typically have both cationic and anionic centers attached to the same molecule. The cationic part is regularly based on primary, secondary, or tertiary amines or quaternary ammonium cations. The anionic part can be more variable. Zwitterionic (amphoteric) surfactants for use in the present invention include but are not limited to sulfonates, e.g. sultaines, CHAPS (3-[(3-cholamidopropyl)dimethylammonio]-1-propanesulfonate) and cocamidopropyl hydroxysultaine; betaines, e.g. cocamidopropyl betaine; phospholipids, phosphatidylserine, phosphatidylethanolamine, phosphatidylcholine, and sphingomyelins.

Non-ionic surfactants for use in the present invention include many long chain alcohols. For example, non-ionic surfactants for use in the present invention include but are not limited to those selected from the group consisting of fatty alcohols, e.g. cetyl alcohol, stearyl alcohol, cetostearyl alcohol, oleyl alcohol; polyethylene glycol alkyl ethers (Brij) $(CH_3-(CH_2)_{10-16}-(O-C_2H_4)_{1-25}-OH)$, e.g. octaethylene glycol monododecyl ether, pentaethylene glycol monododecyl ether; polypropylene glycol alkyl ethers $(CH_3-(CH_2)_{10-16}-(O-C_3H_6)_{1-25}-OH)$; glucoside alkyl ethers $(CH_3-(CH_2)_{10-16}-(O-glucoside)_{1-3}-OH)$, e.g. decyl glucoside, lauryl glucoside, octyl glucoside; polyethylene glycol octylphenyl ethers $(C_8H_{17}-(C_6H_4)-(O-C_2H_4)_{1-25}-OH)$, e.g. Triton X-100; polyethylene glycol alkylphenyl ethers $(C_9H_{19}-(C_6H_4)-(O-C_2H_4)_{1-25}-OH)$, e.g. nonoxynol-9; glycerol alkyl esters, e.g. glyceryl laurate; polyoxyethylene glycol sorbitan alkyl esters, e.g. polysorbate; sorbitan alkyl esters, (Spans); cocamide MEA, cocamide DEA, dodecyldimethylamine oxide, block copolymers of polyethylene glycol and polypropylene glycol (Poloxamers), polyethoxylated tallow amine (POEA).

Further surfactants for use in the present invention include but are not limited to bile acids, e.g. deoxycholic acid; polyoxyethylene- and glycoside-based detergents of the Tween, Triton, and the Brij series, and glycosides, e.g. octyl thioglucoside and maltosides, HEGA and MEGA series detergents.

The present invention is not limited to any specific cleaning agent(s) or any specific surfacetant(s) for practicing the present invention. The above-mentioned embodiments are understood to be exemplary surfactants for practicing the present invention. In one embodiment, the cleaning agent for use in the present invention is one selected from the groups of surfactants mentioned above.

The concentration(s) of the at least one cleaning agent in the composition of the present invention will depend on the intended extent of dilution by addition of water that results in an effecttive concentration of the cleaning agent(s) for cleaning the object of interest. Selecting the type of agent(s) and its(their) concentration(s) for the composition of the invention is a routine procedure for the average person skilled in the art and naturally also depends on the amount and nature of contamination(s) of the respective object intended for cleaning and the intended dilution with water.

The composition of the present invention can be one for various cleaning purposes. For example, its at least one cleaning agent can be selected from the group consisting of industrial, household and personal cleaning agents. Preferably, it is selected from the group consisting of automotive soap, household soap, dishwashing agent, laundry agent, floor cleaning agent, hand soap, body wash shampoo and industrial cleaning agents for reactors and storage tanks used for the production of food, pharmaceuticals or other chemicals.

By common definition, a nutrient is a component in foods that an organism uses to survive and grow. The term "at least one nutrient supporting microbial growth for biological wastewater treatment" as used in the present invention encompasses any compound required for microbial survival and growth, preferably required for microbial survival and growth in waste water compositions. Whether or not a compound is a nutrient or not can easily be determined experimentally by comparing the survival and growth of microorganisms typically found in biological wastewaters in the absence and presence of the investigated nutrient. Naturally, the experimental design must include further components required for survival and growth.

The at least one nutrient supporting microbial growth for biological wastewater treatment for use in the present invention can be either a macro- and/or micronutrient. In one embodiment of the invention, the macronutrient for use in the present invention is selected from the group consisting of N, P and S, more preferably N and P. In another embodiment, the micronutrient for use in the present invention is selected from the group consisting of K, Mg, Fe, Ca, Mn, Co, Cu, Al, Mo and Zn, more preferably Fe, Cu, Al, Mo and Co. In a further embodiment the at least one nutrient is a combination of macro- and micro-nutrients selected from the group consisting of N, P, Fe, Cu, Al, Mo and Co. The latter macro- and micronutrients are particularly suitable for treating grey wastewater.

The nutrients typically required for biological wastewater treatment are not generally added to cleaning agent compositions. The exceptions to this rule include sulfate which is common in detergents, phosphate which may be used as a saponification agent and some other nutrient salts may be used to increase viscosity. Al, for example, may be added to personal care products for antimicrobial characteristics.

In one preferred embodiment, the composition of the present invention is one, wherein the at least one nutrient differs from the at least one cleaning agent. In other words, the composition of the present invention is preferably one, wherein the nutrient(s) is(are) not a cleaning agent(s), more preferably not a surfactant(s). This preferred limitation, i.e. proviso, excludes pure cleaning compositions from the present invention that comprise cleaning agents that can also function as nutrients for microbial growth.

The concentration(s) of the at least one nutrient in the composition of the present invention will depend on the intended extent of dilution by addition of water that results in an effective concentration of the nutrient(s) for supporting microbial growth. Selecting the type of nutrient(s) and its(their) concentration(s) for the composition of the invention is a routine procedure for the average person skilled in the art and naturally also depends on the nature and composition of the water for dilution and the respective object intended for cleaning, both or one of which may already comprise one or some nutrients.

In a preferred embodiment, where microbial growth for biological wastewater treatment may vary, e.g. depending on the time point and growth phase in the wastewater treatment (e.g. initial (filling) phase, growth phase, maturation phase, stable full treatment phase, etc. of the microbial growth and wastewater treatment), the effective concentration(s) of the at least one nutrient(s) supporting the microbial growth for biological wastewater treatment may also vary. For example, for a freshly filled wastewater tank (initial phase with less microorganisms), for a continuous and stable wastewater treatment phase, for a resting wastewater tank (no further addition of wastewater) the effective concentration(s) of nutrient(s) may vary. In such embodiments, the present invention also encompasses different compositions with varying effective nutrient(s) concentration(s).

There might be prior art products that combine components suitable for cleaning and components that might be suitable for supporting microbial growth. However, the composition of the present invention differs from such prior art compositions in that the concentration of the at least one nutrient is adapted for supporting microbial growth upon water dilution for cleaning an object of interest.

Preparing a composition of the present invention is quite simple once the desired dilution, the dilution water composition and the required type(s) of macro- and/or micronutrient is(are) known. In one embodiment the composition for use in the present invention is one, wherein the at least one micro- or macronutrient of the composition is present in an effective minimum concentration C_nutrient calculated according to formula (I):

$$\text{C\_nutrient (mg/g)} = [\text{C\_aim (mg/l)} - \text{C\_water (mg/l)} - \text{C\_use (mg/l)}] \times \text{V\_water (l)/m\_composition (g)},$$

wherein

C_nutrient is the minimum concentration of a micro- or macronutrient in the composition, C_aim is the desired concentration of the micro- or macronutrient in the wastewater,
C_water is the average initial concentration of a micro- or macronutrient in the water before the water is used for washing,

C_use is the average concentration of a micro- or macronutrient added (not including the contribution of the composition) to the wastewater during usage of the composition, V_water is the water volume to be treated, to which the composition is added, m_composition is the amount of composition added.

For example, for a regular hand washing with a nutrient-balanced hand soap according to the present invention, about 1 mg of soap and about 1 liter of water could be utilized. If the water used for washing initially contained, e.g. 0.001 mg/L Fe, and that the washing contributed an additional, e.g. 0.001 mg/L of Fe to the wastewater from the material being washed, and the total carbon in the wastewater is 1 mg/L, then meeting an aim of 0.0025 mg/L requires a soap composition of 0.5 mg/g Fe.

For calculating the minimum concentration of a micro- or macronutrient in the particular composition, C_aim may be calculated relative to the carbon content in the wastewater according to formula (II):

$$C\_aim \ (mg/l) = k \times C\_carbon \ (mg/l),$$

wherein k is the given ratio for a nutrient component and C_carbon is the expected carbon content in the wastewater to be produced.

The given ratio for a nutrient component k differs for each individual micro- or macronutrient. In one exemplary and non-limiting embodiment, the given ratio k is defined for specific micro- or macronutrient as follows:

for N k is $1 \times 10^{-5}$- 0.25, for P k is $1 \times 10^{-5}$- 0.1, for S k is $1 \times 10^{-6}$- 0.1, for Ca k is $1 \times 10^{-6}$- 0.05, for K k is $1 \times 10^{-6}$- 0.05, for Fe k is $1 \times 10^{-7}$ - 0.01, for Mg k is $1 \times 10^{-7}$ - 0.01, for Mn k is $1 \times 10^{-8}$-$1 \times 10^{-3}$, for Cu k is $1 \times 10^{-8}$ - $1 \times 10^{-3}$, for Al k is $1 \times 10^{-9}$ - $1 \times 10^{-3}$, for Zn k is $1 \times 10^{-9}$ - $1 \times 10^{-3}$, for Mo k is $1 \times 10^{-9}$ - $1 \times 10^{-3}$, for Co k is $1 \times 10^{-9}$ -$1 \times 10^{-3}$.

And preferably:

for N k is $1 \times 10^{-4}$- 0.25, for P k is $1 \times 10^{-4}$- 0.1, for S k is $1 \times 10^{-4}$- 0.1, for Ca k is $1 \times 10^{-4}$- 0.05, for K k is $1 \times 10^{-4}$- 0.05, for Fe k is $1 \times 10^{-5}$- 0.01, for Mg k is $1 \times 10^{-5}$- 0.01, for Mn k is $1 \times 10^{-6}$-$1 \times 10^{-3}$, for Cu k is $1 \times 10^{-6}$-$1 \times 10^{-3}$, for Al k is $1 \times 10^{-6}$-$1 \times 10^{-3}$, for Zn k is $1 \times 10^{-7}$ $1 \times 10^{-3}$, for Mo k is $1 \times 10^{-7}$ - $1 \times 10^{-3}$, for Co k is $1 \times 10^{-7}$ -$1 \times 10^{-3}$.

The composition for use in the present invention may comprise many further components for various purposes, e.g. color, odor, viscosity, etc. It is preferred that the composition of the present invention is substantially free of substances inhibiting the growth of or killing microorganisms, preferably bacteria.

In one embodiment the composition of the present invention is substantially free of compounds selected from the group consisting of oxidizing compounds, e.g. chlorine, ozone, peroxides, non-biologically or slowly degradable polymers, non-biologically or slowly degradable dissolved organics, metal chelating compounds, e.g. EDTA, and acids or bases adjusting the pH outside a pH range 5 to 9, preferably 6-8.

In a further embodiment the composition of the present invention comprises at least one nutrient supporting microbial growth for biological wastewater treatment in a retard composition for delayed release of the nutrient.

The composition of the present invention may further comprise at least one microorganism for biological wastewater treatment, preferably in a retard composition for delayed release of the microorganism.

In another embodiment, the present invention is directed to an industrial, household or personal cleaning composition, preferably selected from the group consisting of automotive soap, household soap, dishwashing agent, laundry agent, floor cleaning agent, hand soap, body wash and shampoo, comprising a composition according to the present invention, preferably a personal hygiene composition, preferably selected from the group consisting of a hand soap, body wash and shampoo.

In a second aspect, the present invention is directed to a method for biological waste water treatment comprising the steps of:

(i) providing a cleaning composition according to the present invention,
(ii) adding water to the cleaning composition of (i) to provide an aqueous cleaning composition,
(iii) cleaning an object with the aqueous cleaning composition of (ii),
(iv) transferring the aqueous waste cleaning composition of (iii) to a biological waste treatment system, and
(v) treating the aqueous waste cleaning composition of (iii) in the biological waste treatment system,

wherein the aqueous waste cleaning composition of (iv) is preferably the only substantial input for nutrients into the biological waste treatment system.

The term substantial input in the above context is meant to indicate more than 50, preferably more than 60, more preferably more than 70, most preferably more than 80 or 90 % by weight of the input into the biological waste treatment system is the aqueous waste cleaning composition of (iv).

In a specific non-limiting embodiment the method is one, wherein in step (iv) the aqueous waste cleaning composition of (iii) is transferred to a biological waste treatment system for greywater.

In a preferred embodiment, where the microbial growth for waste water treatment may vary, the method for biological waste water treatment of the present invention may require the use of one or more different compositions with different effective concentrations of the at least one nutrient(s) for supporting microbial growth, e.g. different compositions for an initial (filling) phase, growth phase, maturation phase, stable full treatment phase, etc. of the microbial growth and wastewater treatment.

In an additional embodiment, the method of the invention may be one, wherein the biological waste treatment system is a biological greywater waste treatment system and the aqueous waste cleaning composition of step (iii) in the above method comprises at least one of the following micro-and macronutrients, preferably a macronutrient selected from the group consisting of N, P and S, more preferably N and P, preferably a micronutrient selected from the group consisting of K, Mg, Fe, Ca, Mn, Co, Cu, Al, Mo and Zn, more preferably Fe, Cu, Al, Mo and Co; most preferably the nutrient is a combination of macro- and micronutrients selected from the group consisting of N, P, Fe, Cu, Al, Mo and Co.

Preferably but not necessarily, the ratio of the amount of the cleaning composition in step (i) and the amount of water added in step (ii) is about fixed to provide for an optimum concentration of micro- and/or macronutrients in the aqueous waste cleaning composition produced in step (iii).

Optionally, the biological waste treatment system for use in the present invention comprises at least one microorganism.

In a further preferred embodiment the method is one, wherein the at least one micro- or macronutrient of the cleaning composition used is present in an effective minimum concentration C_nutrient as calculated according to formula (I) above. More preferably, C_aim is calculated relative to the carbon content in the wastewater according to formula (II) above. Most preferably, the k value is defined for specific micro- or macronutrient as described above.

Another aspect of the present invention pertains to the use of a composition according to the invention in a method of the invention as described above.

Preferably, the use of the composition of the present invention is one, wherein

(i) the composition is a personal hygiene or household cleaning composition, preferably selected from the group consisting of a household soap, dishwashing agent, laundry agent, floor cleaning agent, hand soap, body wash and shampoo,
(ii) the composition preferably comprises at least one of the micro- and macronutrients selected from the group consisting of a macronutrient selected from the group consisting of N, P and S, more preferably N and P, a micronutrient selected from the group consisting of K, Mg, Fe, Ca, Mn, Co, Cu, Al, Mo and Zn, more preferably Fe, Cu, Al, Mo and Co; most preferably comprises a combination of macro- and micronutrients selected from the group consisting of N, P, Fe, Cu, Al, Mo and Co in an effective dosage for supporting microbial growth for biological wastewater treatment in the resulting wastewater, preferably greywater.

In one more aspect, the present invention relates to a sanitary or hygiene system comprising

(A) at least one sanitary or hygiene apparatus, preferably selected from the group consisting of a sink, shower, bathtub, laundry machine, and/or dishwasher,
(B) a source of water for the sink, shower, bathtub, laundry machine, and/or dishwasher of (A),
(C) a biological waste treatment system, and
(D) a composition according to the present invention as described above for addition to the water of (B) for the at least one sanitary or hygiene apparatus of (A),

wherein the wastewater outlet of the at least one sanitary or hygiene apparatus of (A) is functionally allocated to the inlet of the biological waste treatment system (B), and wherein the amount of the composition of (D) for use in the at least one sanitary or hygiene apparatus and the amount of the wastewater produced by one sanitary or hygiene application produces a wastewater, preferably greywater, supplemented in macro- and/or micronutrients to support microbial growth in the biological waste treatment system of (C).

In a preferred embodiment the sanitary or hygiene system of the present invention is one, wherein the composition in step (D) is provided in a dispenser for dispensing a predefined amount of said composition for each sanitary or hygiene application.

In the following the subject-matter of the present invention will be illustrated by way of a specific representative example, which is not to be interpreted in any way as limiting the present invention beyond the scope of the appended claims.

Example calculation

A nutrient-balancing soap was developed for a car washing station. The car wash utilized collected rain water, in which the concentration of carbon and nutrients was below detection levels and regarded as containing no carbon or nutrients. Analyzing the wastewater produced after washing a car determined that 100 liters of water were utilized and 255 mg of material (dust) was washed off the car. This equals 2.55 mg/L of water utilized. The carbon and nutrient content of the dust was analyzed and is presented in column A in Table 1 below. The contribution of the dust to the wastewater was then calculated and presented in column B in Table 1 below. The car wash initially utilized a liquid auto soap that did not offer a nutrient balancing feature. This soap was analyzed and determined to contain 135.9 g/L of organic carbon and 11.65 g/L of sulfur. Other nutrients were determined to be below detection and the soap was then regarded as containing no nutrients beyond the carbon and the sulfur. The concentrations of carbon and nutrients in the soap are presented in column C in Table 1 below. The car wash utilized 1 g of soap per L of wastewater produced. We then calculated the contribution of the soap to the wastewater as presented in column D in Table 1 below. Column E displays the values of k we have selected for this soap recipe, that were required to balance the available concentrations of each nutrient to the organic carbon in the wastewater. Each value of k is presented in column E as a ratio to TOC in the wastewater. Column F in Table 1 below then presents C_aim, which was calculated by multiplying the k values in column E by the total amount of carbon in the wastewater (the sum of TOC from columns B and D). Finally, we calculated C_nutrient (column G) by subtracting C_use (column B) from C_aim (column F) and keeping only positive values. The values in column G in Table 1 below represent the concentrations of nutrients that were added to the initial soap in order to achieve a nutrient balance of the wastewater produced by the system. These chemicals were added as standard chemical salts to an existing hand soap product to reach the desired concentrations.

Table 1.

| | Column A | Column B | Column C | Column D | Column E | Column F | Column G |
|---|---|---|---|---|---|---|---|
| | | C_use | | | k | C_aim | C_nutrient |
| | Elemental composition of dry dust | Dust contribution to water | Conc. of washing ingredients in soap | Soap contribution to water | Ratio required for nutrient balance (ratio to TOC) | Conc. required for nutrient balance | Conc. of nutrients to be added to soap |
| | ppm | (mg/L) | (g/L) | (mg/L) | TOC) | (mg/L) | (mg/g) |
| TOC | 429000 | 10.96 | 135.9 | 135.9 | | | |
| N | 23000 | 0.588 | | | 0.06 | 8.8116 | 8.22 |
| P | 1086 | 0.0277 | | | 0.015 | 2.2029 | 2.18 |
| S | 3000 | 0.0767 | 11.65 | 11.65 | 0.005 | 0.7343 | 0.66 |
| Ca | 28796 | 0.736 | | | 0.005 | 0.7343 | |
| K | 12600 | 0.322 | | | 0.005 | 0.7343 | 0.41 |
| Fe | 76726 | 1.96 | | | 0.0025 | 0.36715 | |
| Mg | 9560 | 0.244 | | | 0.0025 | 0.36715 | 0.12 |
| Mn | 520 | 0.0133 | | | 0.00001 | 0.0014686 | |
| Cu | 176.5 | 0.0045 | | | 0.000017 | 0.00249662 | |
| Al | 41714 | 1.07 | | | 0.000012 | 0.00176232 | |
| Zn | 629 | 0.0161 | | | 0.000004 | 0.00058744 | |
| Mo | 4 | 0.000102 | | | 0.000013 | 0.00190918 | 0.00181 |
| Co | 19 | 0.000485 | | | 0.000013 | 0.00190918 | 0.00142 |

**Claims**

1. A composition comprising

    (iii) at least one cleaning agent, and

(iv) at least one nutrient supporting microbial growth for biological wastewater treatment,

wherein upon the addition of water to the composition the cleaning agent (i) is present in an effective concentration for cleaning an object of interest, and wherein the nutrient (ii) is present in an effective concentration for supporting microbial growth for subsequent biological wastewater treatment.

**2.** The composition of claim 1, wherein the cleaning agent is selected from the group consisting of industrial, household and personal cleaning agents, preferably selected from the group consisting of automotive soap, household soap, dishwashing agent, laundry agent, floor cleaning agent, hand soap, body wash shampoo and industrial cleaning agents for reactors and storage tanks used for the production of food, pharmaceuticals or other chemicals.

**3.** The composition of claim 1 or 2, wherein the nutrient is a macro- or micronutrient, preferably a macronutrient selected from the group consisting of N, P and S, more preferably N and P, preferably a micronutrient selected from the group consisting of K, Mg, Fe, Ca, Mn, Co, Cu, Al, Mo and Zn, more preferably Fe, Cu, Al, Mo and Co; most preferably the nutrient is a combination of macro- and micronutrients selected from the group consisting of N, P, Fe, Cu, Al, Mo and Co.

**4.** The composition of any of claims 1 to 3, wherein the at least one nutrient differs from the at least one cleaning agent.

**5.** The composition of any of claims 1 to 4, wherein the at least one micro- or macronutrient of the composition is present in an effective minimum concentration C_nutrient calculated according to formula (I):

$$C\_nutrient\ (mg/g) = [C\_aim\ (mg/l) - C\_water\ (mg/l) - C\_use\ (mg/l)] \times V\_water\ (l)/m\_composition\ (g),$$

wherein

C_nutrient is the minimum concentration of a micro- or macronutrient in the composition,
C_aim is the desired concentration of the micro- or macronutrient in the wastewater,
C_water is the average initial concentration of a micro- or macronutrient in the water before the water is used for cleaning,
C_use is the average concentration of a micro- or macronutrient added (not including the contribution of the composition) to the wastewater during usage of the composition,
V_water is the water volume to be treated, to which the composition is added, m_composition is the amount of composition added.

**6.** The composition of claim 5, wherein C_aim is calculated relative to the carbon content in the wastewater according to formula (II):

$$C\_aim\ (mg/l) = k \times C\_carbon\ (mg/l),$$

wherein k is the given ratio for a nutrient component and C_carbon is the expected carbon content in the wastewater to be produced.

**7.** The composition of claim 6, wherein k is defined for specific micro- or macronutrient as follows:

for N k is 0.06-0.24, for P k is 0.015-0.06, for S k is 0.005-0.02, for Ca k is 0.005-0.02, for K k is 0.005-0.02, for Fe k is 0.0025-0.01, for Mg k is 0.0025-0.01, for Mn k is $1 \times 10^{-5}$-$4.2 \times 10^{-5}$, for Cu k is $1.7 \times 10^{-5}$-$6.7 \times 10^{-5}$, for Al k is $1.2 \times 10^{-5}$-$4.7 \times 10^{-5}$, for Zn k is $4 \times 10^{-6}$-$1.6 \times 10^{-5}$, for Mo k is $1.3 \times 10^{-5}$-$5.3 \times 10^{-5}$, for Co k is $1.3 \times 10^{-5}$-$5.3 \times 10^{-5}$.

**8.** The composition of claim 6, wherein k is defined for specific micro- or macronutrient as follows:

for N k is $1 \times 10^{-4}$- 0.25, for P k is $1 \times 10^{-4}$- 0.1, for S k is $1 \times 10^{-4}$- 0.1, for Ca k is $1 \times 10^{-4}$- 0.05, for K k is $1 \times 10^{-4}$- 0.05, for Fe k is $1 \times 10^{-5}$- 0.01, for Mg k is $1 \times 10^{-5}$- 0.01, for Mn k is $1 \times 10^{-6}$-$1 \times 10^{-3}$, for Cu k is $1 \times 10^{-6}$ - $1 \times 10^{-3}$, for Al k is $1 \times 10^{-6}$ - $1 \times 10^{-3}$, for Zn k is $1 \times 10^{-7}$ - $1 \times 10^{-3}$, for Mo k is $1 \times 10^{-7}$ -$1 \times 10^{-3}$,

## EP 3 450 404 A1

for Co k is $1 \times 10^{-7} - 1 \times 10^{-3}$.

**9.** The composition of any of claims 1 to 8, wherein the composition is substantially free from substances inhibiting the growth of or killing microorganisms, preferably bacteria.

**10.** The composition of any of claims 1 to 9, wherein the composition is substantially free from compounds selected from the group consisting of oxidizing compounds, non-biologically or slowly degradable polymers, non-biologically or slowly degradable dissolved organics, metal chelating compounds, and acids or bases adjusting the pH outside a pH range 5 to 9, preferably 6-8.

**11.** The composition of any of claims 1 to 10, wherein the composition further comprises at least one microorganism for biological wastewater treatment, preferably in a retard composition for delayed release of the microorganism.

**12.** Industrial, household or personal cleaning composition, preferably selected from the group consisting of automotive soap, household soap, dishwashing agent, laundry agent, floor cleaning agent, hand soap, body wash and shampoo, comprising a composition according to any of claims 1 to 11, preferably a personal hygiene composition, preferably selected from the group consisting of a hand soap, body wash and shampoo.

**13.** Method for biological waste water treatment comprising the steps of:

(i) providing a cleaning composition according to any of claims 1 to 12,
(ii) adding water to the cleaning composition of (i) to provide an aqueous cleaning composition,
(iii) cleaning an object with the aqueous cleaning composition of (ii),
(iv) transferring the aqueous waste cleaning composition of (iii) to a biological waste treatment system,
(v) treating the aqueous waste cleaning composition of (iii) in the biological waste treatment system,

wherein the aqueous waste cleaning composition of (iv) is preferably the only substantial input of nutrients into the biological waste treatment system.

**14.** The method of claim 13, wherein the biological waste treatment system is a biological greywater waste treatment system and the aqueous waste cleaning composition of step (iii) comprises at least one of the following micro- and macronutrients, preferably a macronutrient selected from the group consisting of N, P and S, more preferably N and P, preferably a micronutrient selected from the group consisting of K, Mg, Fe, Ca, Mn, Co, Cu, Al, Mo and Zn, more preferably Fe, Cu, Al, Mo and Co; most preferably the nutrient is a combination of macro- and micro-nutrients selected from the group consisting of N, P, Fe, Cu, Al, Mo and Co.

**15.** The method of any of claims 13 and 14, wherein the ratio of the amount of the cleaning composition in step (i) and the amount of water added in step (ii) is fixed to provide for an optimum concentration of micro- and/or macronutrients in the aqueous waste cleaning composition produced in step (iii).

**16.** The method of any of claims 13 to 15, wherein the biological waste treatment system comprises at least one microorganism.

**17.** Use of a composition according to any of claims 1 to 12 in a method of any of claims 13 to 16.

**16.** Use according to claim 15, wherein

(i) the composition is a personal hygiene or household cleaning composition, preferably selected from the group consisting of a household soap, dishwashing agent, laundry agent, floor cleaning agent, hand soap, body wash and shampoo,
(ii) the composition preferably comprises at least one of the micro- and macronutrients selected from the group consisting of a macronutrient selected from the group consisting of N, P and S, more preferably N and P, a micronutrient selected from the group consisting of K, Mg, Fe, Ca, Mn, Co, Cu, Al, Mo and Zn, more preferably Fe, Cu, Al, Mo and Co; most preferably comprises a combination of macro- and micronutrients selected from the group consisting of N, P, Fe, Cu, Al, Mo and Co in an effective dosage for supporting microbial growth for biological wastewater treatment in the resulting wastewater, preferably greywater.

**17.** Sanitary or hygiene system comprising

(A) at least one sanitary or hygiene apparatus, preferably selected from the group consisting of a sink, shower, bathtub, laundry machine, and/or dishwasher,
(B) a source of water for the sink, shower, bathtub, laundry machine, and/or dishwasher of (A),
(C) a biological waste treatment system, and
(D) a composition according to any of claims 1 to 10 for addition to the water of (B) for use in the at least one sanitary or hygiene apparatus of (A),

wherein the wastewater outlet of the at least one sanitary or hygiene apparatus of (A) is functionally allocated to the inlet of the biological waste treatment system (B), and wherein the amount of the composition of (D) for use in the at least one sanitary or hygiene apparatus and the amount of the wastewater produced by one sanitary or hygiene application produces a wastewater, preferably greywater, supplemented in macro- and/or micronutrients to support microbial growth in the biological waste treatment system of (C).

**18.** The sanitary or hygiene system of claim 17, wherein the composition in step (D) is provided in a dispenser for dispensing a predefined amount of said composition for each sanitary or hygiene application.

Europäisches
Patentamt

European
Patent Office

Office européen
des brevets

# EUROPEAN SEARCH REPORT

**Application Number**

EP 17 18 9157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 141775 A (AMUZU KK; HOSHINO KAZUHIRO) 20 May 2004 (2004-05-20) * paragraphs [0010] - [0016], [0019]; figure 1 * | 1-18,20 | INV. C02F3/34 C11D3/38 C02F3/12 |
| X | DE 199 14 791 A1 (BBT BERGEDORFER BIOTECH GMBH [DE]) 5 October 2000 (2000-10-05) * paragraphs [0012], [0014] - [0016]; claims 1-10 * | 1,3,17 | ADD. C02F103/00 C11D3/04 C11D3/06 C11D3/26 |
| X | US 2007/209988 A1 (LEMAY DENISE [CA] ET AL) 13 September 2007 (2007-09-13) * paragraphs [0070], [0076], [0079] - [0080]; figure 2 * | 1,19 | C11D3/33 C11D3/36 C11D3/34 |
| X | WO 2004/043868 A1 (FRITZMEIER GEORG GMBH & CO [DE]; UPHOFF CHRISTIAN [DE]) 27 May 2004 (2004-05-27) * page 8, lines 19-33; claims 1-22 * | 1-4 | |
| A,D | JEFFERSON ET AL.: "Nutrient addition to enhance biological treatment of greywater", WATER RESEARCH, vol. 35, no. 1, 2001, pages 2702-2710, XP002776256, * the whole document * | 1-20 | TECHNICAL FIELDS SEARCHED (IPC) C02F C11D |

The present search report has been drawn up for all claims

| Place of search | Date of completion of the search | Examiner |
|---|---|---|
| The Hague | 21 February 2018 | Fiocchi, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 9157

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2018

| Patent document cited in search report | | Publication date | Patent family member(s) | | Publication date |
|---|---|---|---|---|---|
| JP 2004141775 | A | 20-05-2004 | NONE | | |
| DE 19914791 | A1 | 05-10-2000 | NONE | | |
| US 2007209988 | A1 | 13-09-2007 | CA | 2539804 A1 | 07-09-2007 |
| | | | CA | 2642302 A1 | 13-09-2007 |
| | | | EP | 2001809 A1 | 17-12-2008 |
| | | | US | 2007209988 A1 | 13-09-2007 |
| | | | WO | 2007101344 A1 | 13-09-2007 |
| WO 2004043868 | A1 | 27-05-2004 | AU | 2003285273 A1 | 03-06-2004 |
| | | | EP | 1560796 A1 | 10-08-2005 |
| | | | WO | 2004043868 A1 | 27-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Nutrition, Microbial. **EGLI.** Desk Encyclopedia of Microbiology. Elsevier Academic Press, 2009, 788-804
- **ERIKSON et al.** Characteristics of grey wastewater. *Urban Water,* 2002, vol. 4 (1), 85-104
- **JEFFERSON et al.** Nutrient addition to enhance biological treatment of greywater. *Water Research,* 2001, vol. 35 (1), 2702-2710
- **KUENZLE et al.** An energy-efficient membrane bioreactor for on-site treatment and recovery of wastewater. *Journal of Water Sanitation and Hygiene for Development,* 2015, vol. 5 (3), 448-455